# EUROPÄISCHE PATENTSCHRIFT

(11) **EP 2 172 355 B1**
(45) Veröffentlichungstag und Bekanntmachung des Hinweises auf die Patenterteilung: **06.07.2011**
(21) Anmeldenummer: 09012433.0
(22) Anmeldetag: 30.09.2009
(51) Int. Cl.: B60J 7/06

(54) **Faltverdeck für ein Dach eines Aufbaus eines Personenkraftwagens**
Folding roof for the roof of a passenger vehicle
Toit escamotable pour le toit d'un véhicule automobile

(30) Priorität: 01.10.2008 DE 102008051706
(43) Veröffentlichungstag der Anmeldung: 07.04.2010
(73) Patentinhaber: Magna Car Top Systems GmbH, 74321 Bietigheim-Bissingen (DE)
(72) Erfinder: Katrini, Waleri, Dipl.-Ing., 74321 Bietigheim-Bissingen (DE); Klein, Berthold, Dipl.-Ing. (FH), 74343 Sachsenheim (DE); Reuter, Bärbel, Dipl.-Ing., 71638 Ludwigsburg (DE); Wolf, Philipp, Dipl.-Ing. (BA), 70191 Stuttgart (DE); Bergerhoff, Harald, 22143 Hamburg (DE); Klausmann, Michaela, 71522 Backnang (DE)

(56) Entgegenhaltungen:
- EP-A- 0 336 414
- EP-A- 0 376 203
- EP-A- 1 068 971
- DE-A1- 19 635 166

## Beschreibung

Die Erfindung bezieht sich auf ein Faltverdeck für ein Dach eines Aufbaus eines Personenkraftwagens nach dem Oberbegriff des Patentanspruchs 1. Ein solches Faltverdeck ist aus der DE 196 35 166 A1 bekannt.

Aus der GB 1 552 429 geht ein Dach für ein Kraftfahrzeug hervor, das in einer Dachöffnung eines Aufbaus von einer Schließstellung in eine Offenstellung und vice versa bewegbar ist. Das Dach ist mit einem flexiblen Verdeckbezug versehen, der von Querspriegeln getragen wird. Die Querspriegel sind in Führungsschienen von Dachseitenträgern verschiebbar angeordnet. An Enden der Querspriegel sind Verlängerungen aus Kunststoff angeordnet, wobei diese Enden in Taschen des Verdeckbezugs ruhen.

Gemäß der DE 600 27 662 T2 weist ein Dach für einen Ladeaufbau eines Lastkraftwagens eine Planenabdeckung mit einer in Falten verstellbaren Plane auf, die mittels quer zur Fahrtrichtung verlaufender spriegelartiger Elemente gestützt wird. An Enden eines jeden Elements sind Verlängerungsendstücke angebracht, die jeweils mit einer Muffe auf besagtes Element aufgeschoben sind.

Es ist Aufgabe der Erfindung, ein Faltverdeck für ein Dach eines Personenkraftwagens zu schaffen, dessen Verdeckbezug über Faltspriegel bei einfacher Konstruktion wirkungsoptimiert mit seitlichen Dachabschnitten zusammenarbeitet. Dazu sollten die Faltspriegel mit Spriegelverlängerungen versehen sein, die leicht herstellbar sowie montierbar sind und sich durch gute Funktion auszeichnen.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass jeder Faltspriegel an seinen Enden Spriegelverlängerungen besitzt, die vorbildlich nach Art von Blattfedern ausgebildet sind und den Verdeckbezug mit guter Dichtwirkung gegen die seitlichen Dachwandabschnitte des Aufbaus spannen. Dabei ist jede Spriegeverlängerung zusammen mit einem stopfenartigen Endstück aufwandsarm in einem hohlen Aufnahmeabschnitt des Faltspriegels gehalten. Eine übersichtliche Konstruktion wird dadurch erreicht, dass zwischen Blattfeder und Endstück eine Anschlagkonsole vorgesehen ist, die die Blattfeder trägt. Dabei ist zwischen Blattfeder und Anschlag eine Rückstelleinrichtung mit Stützelement und Anschlagelement angebracht, und zwar dergestalt, dass in der Schließstellung des Faltverdecks und bei gespannter Blattfeder das Anschlagelement vom Stützelement getrennt ist. Schließlich können zur Bauteilvereinfachung das Endstück und die Spriegelverlängerung aus einem Stück hergestellt sein, beispielsweise aus einem geeigneten Kunststoff oder Metall.

In der Zeichnung wird ein Ausführungsbeispiel der Erfindung gezeigt, das nachstehend näher beschrieben wird.

Es zeigen
Fig. 1 eine Schrägansicht von rechts oben auf einen schematisch abgebildeten Personenkraftwagen mit dem Faltverdeck nach der Erfindung,

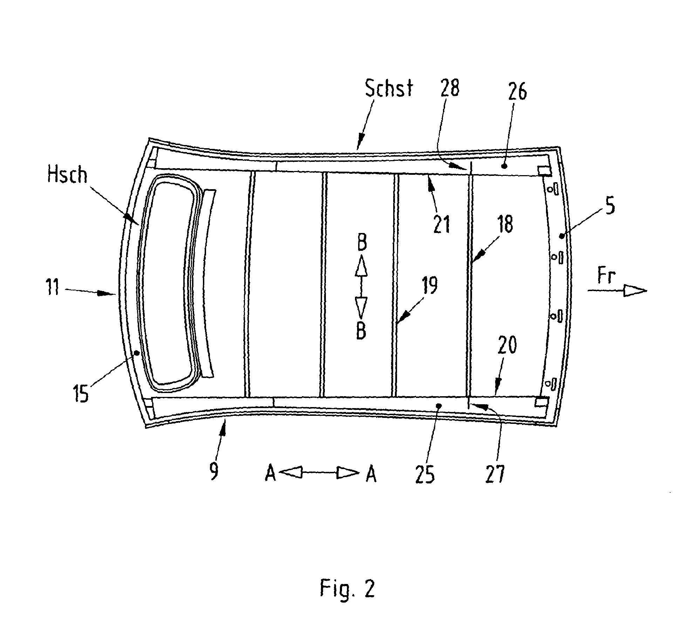

Fig. 2 eine Ansicht von oben auf das Dach des Personenkraftwagens nach Fig. 1,
Fig. 3 eine Schrägansicht auf einen Faltspriegel mit einer ersten Ausführung einer Spriegelverlängerung,
Fig. 4 eine Einzelheit X der Fig. 3,

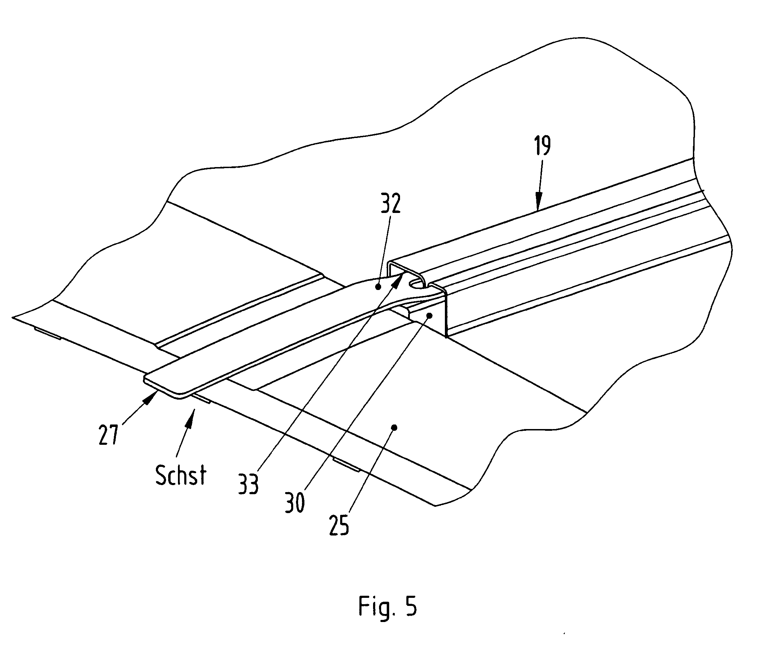

Fig. 5 eine weitere Schrägansicht des Faltspriegels gemäß der Fig. 3,
Fig. 6 eine Schrägansicht auf den Faltspriegel und einen Führungsspriegel des Faltverdecks,
Fig. 7 eine Schrägansicht des Faltspriegels mit einer zweiten Ausführung einer Spriegelverlängerung.

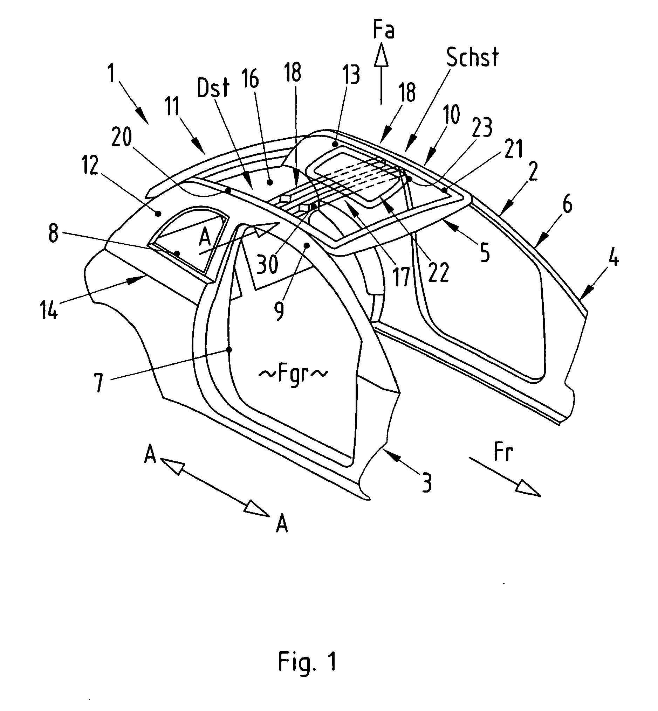

Von einem Personenkraftwagen 1 -Fig. 1- ist lediglich ein eine Dachstruktur Dst aufweisender Aufbau 2 mit gegenüberliegenden Seitenwänden 3 und 4 und einem oberen Aufbauquerträger 5 eines Windschutzscheibenrahmens 6 dargestellt. Die je eine Türöffnung 7 und eine Fensteröffnung 8 aufweisenden Seitenwände 3 und 4, die aufrecht stehen und fest mit dem Aufbau 2 verbunden sind, umfassen Dachseitenträger 9 und 10 , die in einem rückwärtigen Bereich 11 des Aufbaus 2 in Säulen 12 und 13 übergehen und auf eine etwa horizontal verlaufende Gürtellinie 14 des besagten Aufbaus stoßen. Die Dachseitenträger 9 und 10, der vordere Querträger 5 und ein benachbart der Gürtellinie 14 verlaufendes hinteres Querteil 15 des Aufbaus 2 begrenzen eine relativ große Dachöffnung 16, in der ein bewegliches Dach 17 in Fahrzeuglängsrichtung A-A verschiebbar angeordnet ist; die Fahrtrichtung ist mit Fr bezeichnet.

Das eine Heckscheibe Hsch besitzende Dach 17 ist nach Art eines Faltverdecks Fv aufgebaut, wie bspw. in der US 3,658,378 und DE 807 474 beschrieben und zwischen einer Schließstellung Schst und Offenstellung Ost und vice versa bewegbar. In der Offenstellung des Faltverdecks Fv ist letzteres in Falten gelegt, weshalb es eine Anzahl quer zur Fahrzeuglängsrichtung A-A verlaufender, mit Abstand zueinander angeordneter Spriegel, beide stangenartig, aufweist. Bei den mit Abstand zueinander angeordneten Spriegeln handelt es sich um Führungsspriegel 18 und Faltspriegel 19, welche Führungsspriegel 18 in Führungsschienen 20 und 21 der Dachseitenträger 9 und 10 angeordnet sind und mit einem zur Fahrzeugaußenseite Fa hin weisenden Verdeckbezug 22 sowie einer zum Fahrgastraum Fgr zeigenden Innenverkleidung 23 -auch Innenhimmel bezeichnet- zusammenarbeiten. Zwischen Verdeckbezug 22 und Innenverkleidung 23, beide bestehen aus flexiblem Material, erstrecken sich die Führungsspriegel 18 und die Faltspriegel 19, die in Fahrzeugquerrichtung B-B verlaufen.

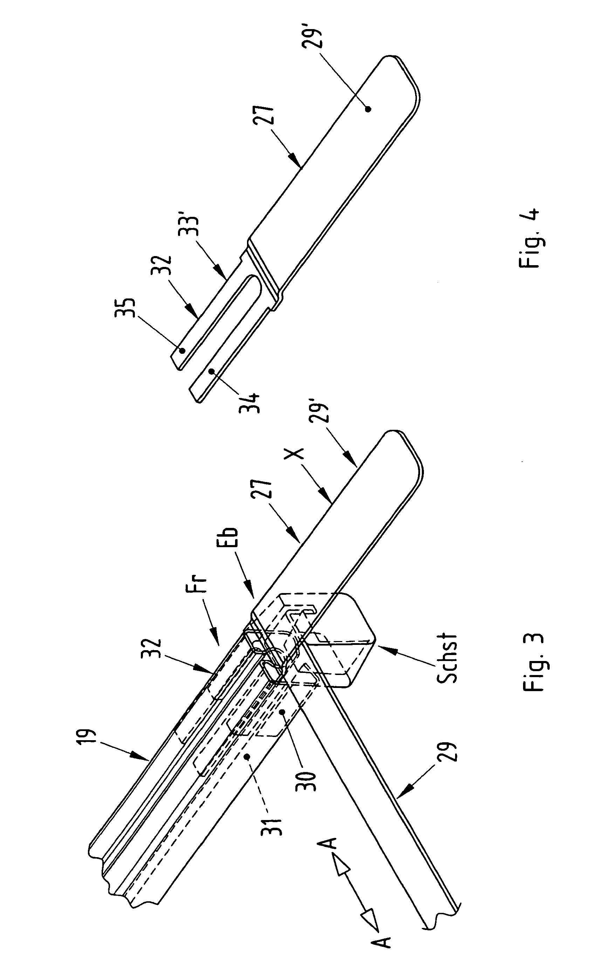

Das die Dachöffnung 24 abdeckende Faltverdeck Fv ist bspw. zusammen mit den Führungsschienen 20 und 21 als Dachmodul ausgebildet, das in den Aufbau 2 eingebaut ist, wobei die Führungsschienen 20 und 21 zur Fahrzeugaußenseite Fa zeigende, an den Formverlauf der Dachaußenform angepasste Dachwandabschnitte 25 und 26 besitzt. Gegen diese Dachwandabschnitte 25 und 26 wird in der Schließstellung Schst des Faltverdecks Fv der Verdeckbezug 22 über Sriegelverlängerungen 27 und 28 des jeweiligen Faltspriegels 19 gespannt. Jede Spriegelverlängerung -z.B. 27- ist in eine nicht gezeigte Tasche des Verdeckbezugs 22 formschlüssig eingebracht und zumindest bereichsweise als Blattfeder 29' dargestellt, die den Verdeckbezug 22 gegen den benachbarten Dachwandabschnitt 26 zu bewegen sucht. Die Spriegelverlängerungen 27 und 28 werden vom Faltspriegel 19 getragen, der unter Zwischenschaltung eines in Fahrzeuglängsrichtung A-A verlaufenden blattfederartigen Federelements 29 in der Offenstellung Ost des Faltverdecks Fv in eine aufgestellte Stellung Stauf -Fig. 4- verbracht wird. Das Federelement 29 ist einerseits am Führungsspriegel 18 und andererseits am Faltspriegel 19 befestigt, über den die Faltenbildung des Verdeckbezugs 22 in der Offenstellung Ost des Faltverdecks Fv erfolgt.

Der Faltspriegel 19 ist zur Halterung bspw. der Spriegelverlängerung 27 und eines stopfenartigen Endstücks 30 an einem Endbereich Eb mit einem hohlen Aufnahmeabschnitt 31 versehen. Im Übrigen sind der Faltspriegel 19 und auch der Führungsspriegel 18 z.B. Hohlkörper aus Metall, Kunststoff oder dgl. ausgeführt, und sie weisen einen viereckigen Querschnitt auf. Die Spriegelverlängerung 27 ist mit einem Halteabschnitt 32 versehen, der zwischen Endstück 30 und einer Wand 33 des Faltspriegels 19 angeordnet ist. Das Endstück 30 ragt aus dem Aufnahmeabschnitt 31 des Faltspriegels 19 heraus und gleitet bei Längsbewegungen des Faltverdecks Fv entlang der benachbarten Führungsschiene 21. Der Halteabschnitt 32 ist nach Art einer Gabel 33' gestaltet -Fig. 4-, deren Zinken 34 und 35 zumindest bereichsweise innerhalb des Aufnahmeabschnitts 31 liegen.

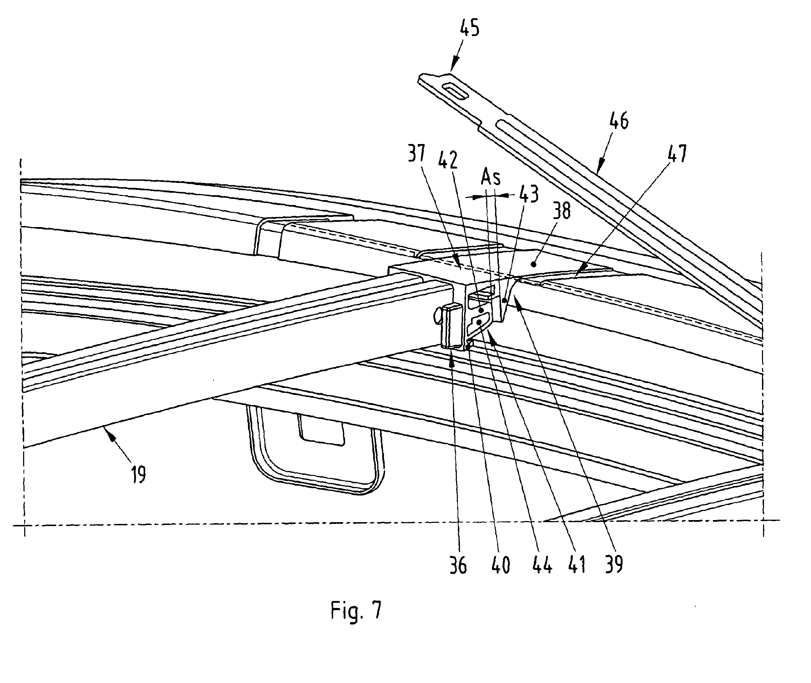

Gemäß Fig. 7 bilden ein Endstück 36 und eine Spriegelverlängerung 37 mit einer Blattfeder 38 einen Bauteilzusammenbau 39, wobei zwischen Blattfeder 38 und Endstück 36 eine sich am Faltrspriegel 19 abstützende Anschlagkonsole 40 vorgesehen ist. Letztere trägt die Blattfeder 38, wobei zwischen Blattfeder 38 und Anschlagkonsole 40 eine eine Vorspannung der Blattfeder 38 bewirkende Rückstelleinrichtung 41 mit Stützelement 42 und Anschlagelement 43 vorgesehen ist. Wenn die Blattfeder 38 der Spriegelverlängerung 37 den Verdeckbezug 22 gegen den Dachwandabschnitt 26 spannt, ist zwischen Stützelement 42 und Anschlagelement 43 ein Abstand As vorgesehen, d.h. die beiden letzteren sind voneinander getrennt. In der Offenstellung Ost des Faltverdecks Fv liegt das Anschlagelement 43 am Stützelement 42 an. Darüber hinaus ist in die Spriegelverlängerung 37 eine etwa im Querschnitt rechteckige Aufnahme 44 eingearbeitet, und zwar für einen ebenfalls im Querschnitt rechteckigen Endbereich 45 einer Blattfeder 46, mit der der Faltspriegel 19 aufgestellt wird. Zur Bauteilvereinfachung sind das Endstück 36 mit Rückstelleinrichtung 41, die Blattfeder 38 und die Anschlagkonsole 40 aus einem Stück, z.B. aus Kunststoff, Metall oder dgl., hergestellt. Um sichtbare Oberflächenunebenheiten am Verdeckbezug 22 zu vermeiden, ist für die Spriegelverlängerung 37, namentlich die Blattfeder 46 des Endstücks 36 am Dachwandabschnitt 26, eine U-förmige Ausnehmung 47 eingearbeitet.

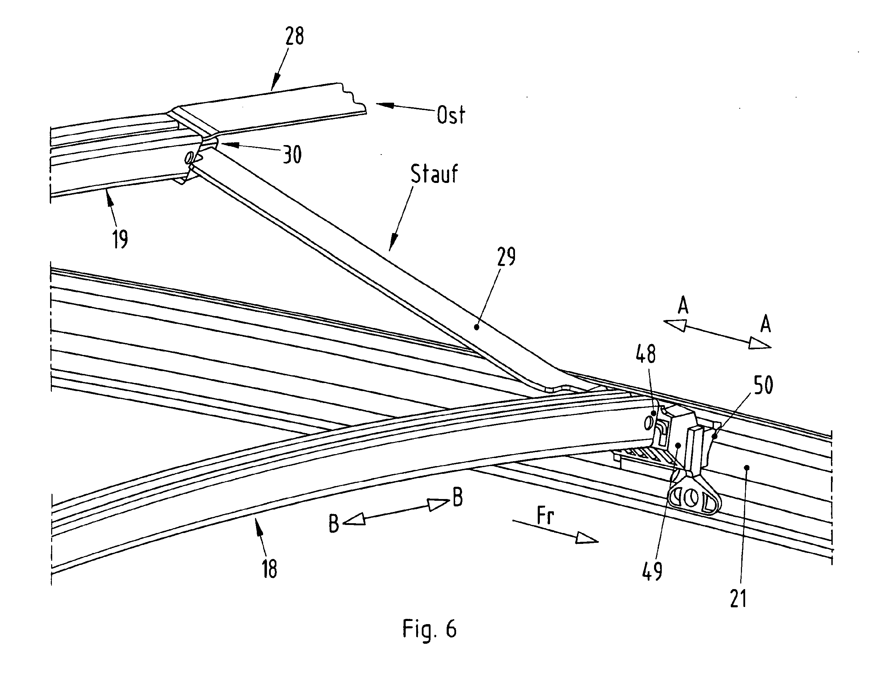

Schließlich ist der Führungsspriegel 18 an seinen Enden 48 jeweils mit einem Endstück 49 ausgestattet -Fig. 6-, das ähnlich wie das Endstück 30 des Faltspriegels 19 ausgebildet ist, jedoch zur Verschiebung des Führungsspriegels 18 in der Führungsschiene 21 mit einem oder mehreren entsprechenden Führungselementen 50 ausgestattet ist.

## Patentansprüche

1. Faltverdeck (Fv) für ein Dach eines Aufbaus eines Personenkraftwagens, das zwischen einer Schließstellung und einer Offenstellung bewegbar ist und in der Schließstellung eine Dachöffnung abdeckt, wobei das Faltverdeck (Fv) einen an mit Abstand zueinander angeordneten, in Fahrzeugquerrichtung sich erstreckenden einem oder mehreren Führungsspriegeln (18) und Faltspriegeln (19) gehaltenen Verdeckbezug aufweist, wovon jeder Faltspriegel (19) seitliche Spriegelverlängerungen (27,28) besitzt, mit denen der Verdecktezug (22) in der Schließstellung des Faltverdecks gegen seitliche Dachwandabschnitte (25,26) des Aufbaus gespannt wird, **dadurch gekennzeichnet, dass** jede mit dem Verdeckbezug (22) verbundene Spriegelverlängerung (27 und 28; 37) zumindest abschnittsweise nach Art einer Blattfeder (29; 38) ausgebildet ist, die den Verdeckbezug (22) gegen den benachbarten Dachwandabschnitt (25 und 26) zu bewegen sucht und vom Faltspriegel (19) getragen wird.

2. Faltverdeck nach Anspruch 1, **dadurch gekennzeichnet, dass** der Faltspriegel (19) zur Aufnahme der Spriegelverlängerung (27 und 28;) und eines stopfenartigen Endstücks (30) zumindest an einem Endbereich (Eb) mit einem hohlen Aufnahmeabschnitt (31) versehen ist.

3. Faltverdeck nach Anspruch 2, **dadurch gekennzeichnet, dass** ein Halteabschnitt (32) der Spriegelverlängerung (27 und 28) zwischen dem Endstück (30) und einer Wand (33) des Faltspriegels (19) festgelegt ist.

4. Faltverdeck nach Anspruch 3, **dadurch gekennzeichnet, dass** der Halteabschnitt der Spriegelverlängerung (27 und 28) nach Art einer Gabel (33') ausgebildet ist, deren Zinken (34 und 35) zumindest bereichsweise innerhalb des Aufnahmeabschnitts (31) liegen.

5. Faltverdeck nach einem oder mehreren der vorangehenden Ansprüche, **dadurch gekennzeichnet, dass** das Endstück (36) und die Spriegelverlängerung (37) mit Blattfeder (38) einen Bauteilzusammenbau (39) bilden.

6. Faltverdeck nach den Ansprüchen 1 und 5, **dadurch gekennzeichnet, dass** zwischen Blattfeder (38) und Endstück (36) eine sich am Faltspriegel (19) abstützende Anschlagkonsole (40) vorgesehen ist, die die Blattfeder (38) trägt, wobei zwischen Blattfeder (38) und Anschlagkonsole (40) eine Rückstelleinrichtung (41) mit Stützelement (42) und Anschlagelement (43) angebracht ist, dergestalt, dass in der Schließstellung (Schst) des Faltverdecks (Fv) und bei gespannter Blattfeder (38) das Anschlagelement (43) vom Stützelement (42) getrennt ist.

7. Faltverdeck nach Anspruch 5, **dadurch gekennzeichnet, dass** das Endstück (36) und die Spriegelverlängerung (37) aus einem Stück hergestellt sind.

8. Faltverdeck nach Anspruch 7, **dadurch gekennzeichnet, dass** das Endstück (36) und die Spriegelverlängerung (37) als eine Baueinheit aus Kunststoff, Metall oder dgl. hergestellt sind.

9. Faltverdeck nach Anspruch 1, **dadurch gekennzeichnet, dass** der Dachwandabschnitt (26) zur Aufnahme der Spriegelverlängerung (37) bzw. Blattfeder (38) eine Ausnehmung (47) zum Ausgleich von Oberflächenunebenheiten des Verdeckbezugs (22) aufweist.

10. Faltverdeck nach einem oder mehreren der vorangehenden Ansprüche, **dadurch gekennzeichnet, dass** in das Endstück (36) bzw. die Spriegelverlängerung (37) eine Aufnahme (44) für einen Endbereich (45) einer den Faltspriegel (19) in eine aufgestellte Stellung (Stauf) verbringende Blattfeder (46) eingearbeitet ist.

11. Faltverdeck nach Anspruch 10, **dadurch gekennzeichnet, dass** der Endbereich (45) der Blattfeder (46) und die Aufnahme des Endstücks (36) bzw. der Spriegelverlängerung (37) im Wesentlichen unter Formschluss zusammenarbeiten.

12. Faltverdeck nach einem oder mehreren der vorangehenden Ansprüche, **dadurch gekennzeichnet, dass** der Führungsspriegel (18) an seinen Enden (48) mit Endstücken (49) versehen ist, die zur Verschiebung des Führungsspriegels (18) in der Führungsschiene (21) mit entsprechenden Führungselementen (50) ausgestattet ist.

## Claims

1. Folding top (Fv) for a roof of a passenger vehicle body, said folding top being movable between a closed position and an open position and, in the closed position, covering a roof opening, wherein the folding top (Fv) has a top cloth which is held on one or more guide bows (18) and folding bows (19), which are arranged at a distance from one another, extend in the transverse direction of the vehicle and of which each folding bow (19) has lateral bow extensions (27, 28) with which the top cloth (22) is tensioned against lateral roof wall sections (25, 26) of the body in the closed position of the folding top, **characterized in that** each bow extension (27 and 28; 37) connected to the top cloth (22) is formed at least in sections in the manner of a leaf spring (29; 38) which attempts to move the top cloth (22) towards the adjacent roof wall section (25 and 26) and is supported by the folding bow (19).

2. Folding top according to Claim 1, **characterized in that** the folding bow (19) is provided with a hollow receiving section (31) at least on an end region (Eb) in order to receive the bow extension (27 and 28) and a stopper-like end component (30).

3. Folding top according to Claim 2, **characterized in that** a holding section (32) of the bow extension (27 and 28) is fixed between the end component (30) and a wall (33) of the folding bow (19).

4. Folding top according to Claim 3, **characterized in that** the holding section of the bow extension (27 and 28) is designed in the manner of a fork (33'), the prongs (34 and 35) of which lie at least in some regions within the receiving section (31).

5. Folding top according to one or more of the preceding claims, **characterized in that** the end component (36) and the bow extension (37) form a component assembly (39) with the leaf spring (38).

6. Folding top according to Claims 1 and 5, **characterized in that** a stop bracket (40) which is supported on the folding bow (19) and bears the leaf spring (38) is provided between the leaf spring (38) and end component (36), with a resetting device (41) with a support element (42) and stop element (43) being fitted between the leaf spring (38) and stop bracket (40) in such a manner that, in the closed position (Schst) of the folding top (Fv) and with the leaf spring (38) tensioned, the stop element (43) is separated from the support element (42).

7. Folding top according to Claim 5, **characterized in that** the end component (36) and the bow extension (37) are produced from a single piece.

8. Folding top according to Claim 7, **characterized in that** the end component (36) and the bow extension (37) are produced as a constructional unit from plastic, metal or the like.

9. Folding top according to Claim 1, **characterized in that** the roof wall section (26) for receiving the bow extension (37) and leaf spring (38) has a recess (47) in order to compensate for unevennesses in the surface of the top cloth (22).

10. Folding top according to one or more of the preceding claims, **characterized in that** a receptacle (44) for an end region (45) of a leaf spring (46) bringing the folding bow (19) into an erected position (Stauf) is incorporated into the end component (36) or the bow extension (37).

11. Folding top according to Claim 10, **characterized in that** the end region (45) of the leaf spring (46) and the receptacle of the end component (36) or of the bow extension (37) substantially cooperate in an interlocking manner.

12. Folding top according to one or more of the preceding claims, **characterized in that** the ends (48) of the guide bow (18) are provided with end components (49) equipped with corresponding guide elements (50) for displacing the guide bow (18) in the guide rail (21).

## Revendications

1. Capote pliante (Fv) pour un toit d'une carrosserie d'un véhicule automobile, qui peut être déplacée entre une position de fermeture et une position d'ouverture et qui, dans la position de fermeture, recouvre une ouverture de toit, la capote pliante (Fv) présentant un recouvrement de capote maintenu sur un ou plusieurs arceaux de guidage (18) et arceaux pliants (19) s'étendant dans la direction transversale du véhicule et disposés à distance les uns des autres, dont chaque arceau pliant (19) possède des prolongements d'arceau latéraux (27, 28), avec lesquels le revêtement de capote (22) est serré dans la position de fermeture de la capote pliante contre des portions de paroi de toit latérales (25, 26) de la carrosserie, **caractérisée en ce que** chaque prolongement d'arceau (27 et 28 ; 37) connecté au revêtement de capote (22) est réalisé au moins en partie à la manière d'un ressort à lame (29 ; 38), qui a pour effet de déplacer le revêtement de capote (22) contre la portion de paroi de toit adjacente (25 et 26) et qui est porté par l'arceau pliant (19).

2. Capote pliante selon la revendication 1, **caractérisée en ce que** l'arceau pliant (19) pour recevoir le prolongement d'arceau (27 et 28) et un embout de type bouchon (30) est pourvu au moins en une région d'extrémité (Eb) d'une portion de réception creuse (31).

3. Capote pliante selon la revendication 2, **caractérisée en ce qu'**une portion de retenue (32) du prolongement d'arceau (27 et 28) est fixée entre l'embout (30) et une paroi (33) de l'arceau pliant (19).

4. Capote pliante selon la revendication 3, **caractérisée en ce que** la portion de retenue du prolongement d'arceau (27 et 28) est réalisée à la manière d'une fourche (33'), dont les dents (34 et 35) sont situées au moins en partie à l'intérieur de la portion de réception (31).

5. Capote pliante selon l'une quelconque ou plusieurs des revendications précédentes, **caractérisée en ce que** l'embout (36) et le prolongement d'arceau (37) forment avec le ressort à lame (38) un assemblage de composants (39).

6. Capote pliante selon les revendications 1 et 5, **caractérisée en ce qu'**entre le ressort à lame (38) et l'embout (36) est prévue une console de butée (40) s'appuyant contre l'arceau pliant (19), laquelle porte le ressort à lame (38), un dispositif de rappel (41) avec un élément de support (42) et un élément de butée (43) étant monté entre le ressort à lame (38) et la console de butée (40), de telle sorte que dans la position de fermeture (Schst) de la capote pliante (Fv) et lorsque le ressort à lame est tendu (38), l'élément de butée (43) est séparé de l'élément de support (42).

7. Capote pliante selon la revendication 5, **caractérisée en ce que** l'embout (36) et le prolongement d'arceau (37) sont fabriqués d'une seule pièce.

8. Capote pliante selon la revendication 7, **caractérisée en ce que** l'embout (36) et le prolongement d'arceau (37) sont fabriqués sous forme d'unité constructive en plastique, métal ou similaire.

9. Capote pliante selon la revendication 1, **caractérisée en ce que** la portion de paroi de toit (26) pour recevoir le prolongement d'arceau (37) ou le ressort à lame (38) présente un évidement (47) pour compenser les inégalités de surface du revêtement de capote (22).

10. Capote pliante selon l'une quelconque ou plusieurs des revendications précédentes, **caractérisée en ce que** dans l'embout (36) ou le prolongement d'arceau (37) est pratiqué un logement (44) pour une région d'extrémité (45) d'un ressort à lame (46) amenant l'arceau pliant (19) dans une position dressée (Stauf).

11. Capote pliante selon la revendication 10, **caractérisée en ce que** la région d'extrémité (45) du ressort à lame (46) et le logement de l'embout (36) ou du prolongement d'arceau (37) coopèrent essentiellement par engagement par coopération de forme.

12. Capote pliante selon l'une quelconque ou plusieurs des revendications précédentes, **caractérisée en ce que** l'arceau de guidage (18) est pourvu à ses extrémités (48) d'embouts (49), qui sont prévus pour le déplacement de l'arceau de guidage (18) dans le rail de guidage (21) avec des éléments de guidage correspondants (50).
